# EUROPÄISCHE PATENTSCHRIFT

(11) **EP 3 494 021 B1**
(45) Veröffentlichungstag und Bekanntmachung des Hinweises auf die Patenterteilung: **10.08.2022**
(21) Anmeldenummer: 17734709.3
(22) Anmeldetag: 28.06.2017
(51) Int. Cl.: B60W 50/14, B60W 50/08, B60W 50/00, B60W 30/12, B60W 30/16

(54) **VERFAHREN ZUR ANPASSUNG EINER MENSCH-MASCHINE-SCHNITTSTELLE IN EINEM KRAFTFAHRZEUG UND KRAFTFAHRZEUG**
METHOD FOR ADAPTING A MAN-MACHINE INTERFACE IN A MOTOR VEHICLE, AND MOTOR VEHICLE
PROCÉDÉ D'ADAPTATION D'UNE INTERFACE HOMME-MACHINE DANS UN VÉHICULE À MOTEUR, ET VÉHICULE À MOTEUR

(30) Priorität: 03.08.2016 DE 102016214394
(43) Veröffentlichungstag der Anmeldung: 12.06.2019
(73) Patentinhaber: Volkswagen Aktiengesellschaft, 38440 Wolfsburg (DE)
(72) Erfinder: OTHERSEN, Ina, 28329 Bremen (DE); HINZMANN, Sebastian, 38176 Meerdorf (DE); PETERMANN-STOCK, Ina, 38448 Wolfsburg (DE); STEPHAN, Amelie, 38102 Braunschweig (DE)
(86) Internationale Anmeldenummer: PCT/EP2017/065964
(87) Internationale Veröffentlichungsnummer: WO 2018/024413

(56) Entgegenhaltungen:
- WO-A1-2015/151243
- DE-A1-102013 000 632
- DE-A1-102013 019 141
- DE-C1- 4 226 747

## Beschreibung

Die Erfindung betrifft ein Verfahren zur Anpassung einer Mensch-Maschine-Schnittstelle in einem Kraftfahrzeug sowie ein Kraftfahrzeug.

Zukünftig werden sich im Fahrzeug verschiedene Automationsstufen wiederfinden, die dem Fahrer schrittweise die Regelungstätigkeit abnehmen. Die Bandbreite reicht dabei vom manuellen Fahren über assistierte Zustände bis hin zu vollautomatisierten Funktionen. Der Fahrer findet sich folglich in einem Spektrum an Assistenz und Automation wieder. Vor allem der Wechsel zwischen den einzelnen Graden an Automation und der damit einhergehenden Verantwortungsverschiebung stellen eine neue Herausforderung für den Fahrer dar. Insbesondere die Bereiche teilautomatisches und hochautomatisches Fahren sind klar zu kommunizieren. In beiden Stufen übernimmt das Fahrzeug die Quer- und Längsführung. Jedoch variiert die Rolle des Fahrers. Bei einem teilautomatischen System muss der Fahrer permanent überwachen und zu einer sofortigen Übernahme der Fahrzeugführung bereit sein. Er stellt somit die entscheidende Rückfallebene dar. Im hochautomatischen Modus muss der Fahrer das System nicht permanent überwachen und kann sich anderen Tätigkeiten zuwenden. Dabei muss er innerhalb eines definierten Zeitfensters (ca. 10 s) zur Fahrzeugübernahme bereit sein.

Um das automatisierte Fahren für die Mobilität der Zukunft sicher und leicht bedienbar für alle Nutzergruppen zu machen, muss die Interaktion und Kommunikation zwischen Mensch und Maschinenschnittstelle kontextsensitiv gestaltet werden. Ziel ist es, den Fahrer nach der automatisierten Fahrt wieder sicher in die manuelle Fahraufgabe zurückzuführen bzw. den Fahrer sicher vom manuellen in das automatisierte Fahren zu führen. Zentral in diesem Kontext sind Kontrolle, Vertrauen und Wissen über den Systemzustand des Fahrzeugs - also die eindeutige Vermittlung der Verantwortungsverschiebung zwischen Fahrer und Automation. Langfristig gilt es, das Vertrauen der Nutzer in die automatisierte Fahrfunktion zu sichern, um die Nutzerakzeptanz der Funktion zu wahren.

Aus der DE 10 2013 110 864 A1 ist ein Verfahren für ein Fahrerassistenzsystem eines Fahrzeugs bekannt, wobei das Fahrerassistenzsystem in der Lage ist, das Fahrzeug mittels einer Autopilotfunktion zumindest teilweise automatisch zu steuern, wobei ein Aktivierungszustand der Autopilotfunktion bestimmt wird und eine Anzeigevorrichtung des Fahrerassistenzsystems in Abhängigkeit des Aktivierungszustandes der Autopilotfunktion aktiviert. Beispielsweise wird die Anzeigevorrichtung mechanisch verfahren, sodass diese im aktivierten Zustand der Autopilotfunktion sichtbar ist und im deaktivierten Zustand derart eingefahren ist, dass diese nicht sichtbar ist. Anhand der aktivierten oder deaktivierten Anzeigevorrichtung erkennt dann der Nutzer sehr einfach und schnell den Aktivierungszustand der Autopilotfunktion. Dabei können Informationen der Autopilotfunktion auf der Anzeigevorrichtung ausgegeben werden. Die Informationen der Autopilotfunktion können beispielweise eine verbleibende Dauer einer mittels der Autopilotfunktion automatisch gesteuerten Fahrt umfassen. Alternativ oder ergänzend kann ein zukünftiges Fahrmanöver, welches von der Autopilotfunktion für die automatisch gesteuerte Fahrt bestimmt wurde, auf der Anzeigevorrichtung ausgegeben werden. Weiterhin kann alternativ oder zusätzlich eine Umgebungsinformation ausgegeben werden. Bei aktivierter Anzeigevorrichtung erhalten der Fahrer und die Insassen des Fahrzeugs somit vielfältige Informationen von der Autopilotfunktion, welche das Vertrauen in die Autopilotfunktion und somit die Akzeptanz dieser neuartigen Funktion erhöhen können.

Aus der DE 10 2013 224 118 A1 ist ein Verfahren zum Steuern eines Fahrzeugs bekannt, wobei Verhaltensinformationen eines Fahrers in dem Fahrzeug über mindestens eine Erfassungsvorrichtung erhalten werden, wobei in Abhängigkeit von den Verhaltensinformationen zu einem Steuerstatus des Fahrzeugs gewechselt wird. Dabei umfasst der Steuerstatus des Fahrzeugs einen Fahrer-Steuerstatus, einen halbautonomen Steuerstatus und einen autonomen Steuerstatus.

Aus der WO 2015/151243 A1 ist ein gattungsgemäßes Verfahren zur Anpassung einer Mensch-Maschine-Schnittstelle in einem Kraftfahrzeug bekannt, wobei das Kraftfahrzeug in mindestens einem automatisierten Fahrmodus betreiben werden kann.

Aus der DE 10 2013 019 141 A1 ist ein Verfahren zum Betreiben eines Fahrerassistenzsystems eines Kraftfahrzeugs bekannt, wobei eine Blickrichtung des Fahrers erfasst wird, um einen Wechsel aus einem autonomen Fahrmodus vorzunehmen.

Aus der DE 10 2013 000 632 A1 und der DE 42 26 747 C1 sind jeweils Sitzverstellungen in einem autonom fahrenden Kraftfahrzeug in Abhängigkeit des Fahrmodus bekannt.

Der Erfindung liegt das technische Problem zugrunde, eine Mensch-Maschine-Schnittstelle in einem Kraftfahrzeug anzupassen, sodass die Akzeptanz eines automatisierten Fahrmodus weiter erhöht wird. Ein weiteres technisches Problem ist die Schaffung eines solchen Kraftfahrzeugs.

Die Lösung des technischen Problems ergibt sich durch ein Verfahren mit den Merkmalen des Anspruchs 1 sowie ein Kraftfahrzeug mit den Merkmalen des Anspruchs 5. Weitere vorteilhafte Ausgestaltungen der Erfindung ergeben sich aus den Unteransprüchen.

Das Verfahren zur Anpassung einer Mensch-Maschine-Schnittstelle in einem Kraftfahrzeug, wobei das Kraftfahrzeug in mindestens einem automatisierten Fahrmodus betrieben werden kann, weist die folgenden Verfahrensschritte auf:
- Es wird ein Vertrauensmaß des Fahrers im automatisierten Fahrmodus erfasst oder ermittelt und
- in Abhängigkeit des erfassten oder ermittelten Vertrauensmaßes wird die Mensch-Maschine-Schnittstelle angepasst.

Hierdurch wird erreicht, dass bei einem noch geringen Vertrauensmaß die Mensch-Maschine-Schnittstelle derart angepasst wird, dass der Nutzer vereinfacht Vertrauen aufbauen kann, wobei hingegen bei einem Nutzer mit hohem Vertrauensmaß die Anpassung überwiegend darauf abgestimmt ist, den Nutzer möglichst wenig zu stören. Im einfachsten Fall existieren nur zwei Vertrauensmaße, nämlich "hoch" und "niedrig" bzw. "Experte" und "Novize". Es sind jedoch weitere Abstufungen möglich. Auch ist es möglich, den Vertrauensmaßstab kontinuierlich festzulegen, beispielsweise als Prozentzahl zwischen 0 % und 100 %. Dabei kann weiter vorgesehen sein, dass das Kraftfahrzeug mehrere automatisierte Fahrmodi aufweist, wobei das Verfahren in allen, in einzelnen oder nur in einem automatisierten Fahrmodus abläuft, beispielsweise dem Fahrmodus mit dem höchsten Automatisierungsgrad. Die Mensch-Maschine-Schnittstelle kann dabei mindestens eine Anzeigeeinheit aufweisen, wobei vorzugsweise verschiedene Anzeigeeinheiten zum Einsatz kommen. Beispielsweise ist eine Anzeigeeinheit ein freiprogrammierbares Kombiinstrument, eine Anzeigeeinheit ein Head-up-Display sowie eine Anzeigeeinheit eine zentrale Anzeigeeinheit. Alternativ oder ergänzend weist ein Rückspiegel mindestens eine Anzeigeeinheit auf. Weiter kann die Mensch-Maschine-Schnittstelle eine Spracheingabe- und -ausgabeeinheit aufweisen.

Auch Licht- und Tonanimationen können Bestandteil der Mensch-Maschine-Schnittstelle sein und in Abhängigkeit des Vertrauensmaßes angepasst werden.

Erfindungsgemäß wird in Abhängigkeit eines Vertrauensmaßes ein Sitz beispielsweise in eine Ruheposition verfahren und/oder eine Mittelkonsole verfahren.

In einer Ausführungsform werden bei einem höheren Vertrauensmaß weniger Informationen und/oder Interaktionsaufforderungen ausgegeben. Beispielsweise werden bei einem höheren Vertrauensmaß auf einer Anzeigeeinheit nur Systemstatus und Dauer und/oder Länge der pilotierten Fahrt angezeigt, wohingegen bei einem geringeren Vertrauensmaß zusätzlich noch Fahrmanöver und/oder Begründungen für Fahrmanöver und/oder Handlungsanweisungen ausgegeben werden. Bei der Sprachausgabe kann vorgesehen sein, dass bei einem geringen Vertrauensmaß der Fahrer direkte Handlungsanweisungen zur Aktivierung oder Deaktivierung der automatisierten Fahrt erhält, beispielsweise "Zur Aktivierung beide Lenkradtasten gleichzeitig drücken".

In einer Ausführungsform gibt der Nutzer über ein Eingabeelement das Vertrauensmaß selbst ein, sodass das Vertrauensmaß erfasst wird. In einer alternativen Ausführungsform wird hingegen das Vertrauensmaß aus Betätigungshandlungen und/oder einer Auswertung der Blickrichtung eines Fahrers ermittelt. Wenn sich beispielsweise der Fahrer direkt nach der Aktivierung des pilotierten Modus sich aktiv den Multimediainhalten zuwendet, ist von einem höheren Vertrauensmaß auszugehen. Aber auch das Anpassen des Sitzes in eine Ruheposition ist eine Bedienhandlung, welche einen Rückschluss auf ein hohes Vertrauensmaß zulässt. Alternativ oder zusätzlich kann die Blickrichtung mit einer Kamera ausgewertet werden. So drückt beispielsweise ein konstanter Blick auf ein Zentraldisplay (wo beispielsweise ein Film abgespielt wird) trotz Spurwechsel ein hohes Vertrauensmaß aus. Auch eine ruhige, die Fahraufgabe nicht überwachende Blickbewegung spricht für ein hohes Vertrauen. Hingegen spricht ein häufiger Blick in die Spiegel oder auf Anzeigeeinheiten, die den Systemzustand anzeigen, für ein geringeres Vertrauensmaß.

In einer weiteren Ausführungsform wird mindestens eine graphische Oberfläche mindestens einer Anzeigeeinheit in Abhängigkeit des Vertrauensmaßes angepasst. Alternativ kann vorgesehen sein, dass mindestens eine Anzeigeeinheit in Abhängigkeit des Vertrauensmaßes derart angesteuert wird, dass diese für den Nutzer nicht mehr sichtbar ist. Beispielsweise wird die Anzeigeeinheit eingefahren oder eine mechanische Abdeckung vor die Anzeigeeinheit geschoben. Weiter kann vorgesehen sein, dass ein Rückspiegel zwei nebeneinander angeordnete Anzeigeeinheiten aufweist, wobei in einem nicht automatisierten Fahrmodus Bilder einer rückwärtigen Kamera dargestellt werden. Im automatisierten Fahrmodus kann bei geringem Vertrauensmaß vorgesehen sein, dass in einer der beiden Anzeigeeinheiten Informationen dargestellt werden, wohingegen die andere Anzeigeeinheit weiter als Spiegel angesteuert wird. Bei einem hohen Vertrauensmaß können hingegen beide Anzeigeeinheiten zur Informationsdarstellung verwendet werden.

Das Kraftfahrzeug mit einer Mensch-Maschine-Schnittstelle, wobei das Kraftfahrzeug derart ausgebildet ist, dass das Kraftfahrzeug in mindestens einem automatisierten Fahrmodus betrieben werden kann, weist eine Auswerte- und Steuereinheit auf, die derart ausgebildet ist, dass ein Vertrauensmaß des Fahrers erfasst oder ermittelt wird, wobei in Abhängigkeit des erfassten oder ermittelten Vertrauensmaßes die Mensch-Maschine-Schnittstelle angepasst wird.

Hinsichtlich der weiteren Ausgestaltungen wird auf die vorangegangenen Ausführungen Bezug genommen.

Die Erfindung wird nachfolgend anhand eines bevorzugten Ausführungsbeispiels näher erläutert. Die Figuren zeigen:
- Fig. 1: eine schematische Darstellung eines Innenraums eines Kraftfahrzeugs,
- Fig. 2: ein schematisches Blockschaltbild einer Vorrichtung zur Anpassung einer Mensch-Maschine-Schnittstelle und
- Fig. 3: eine Darstellung eines Kraftfahrzeugs.

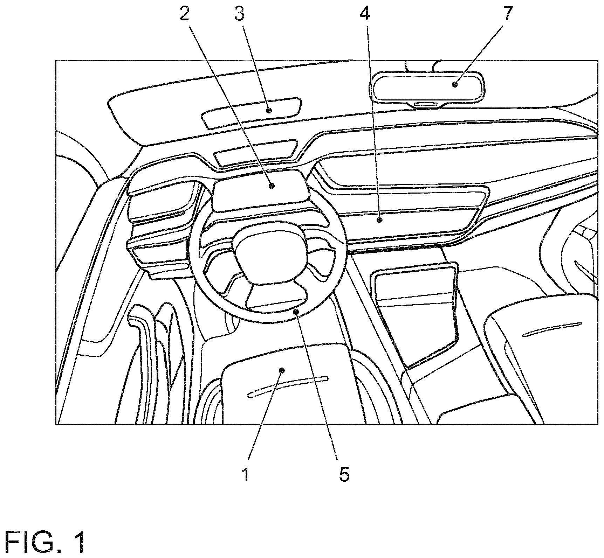

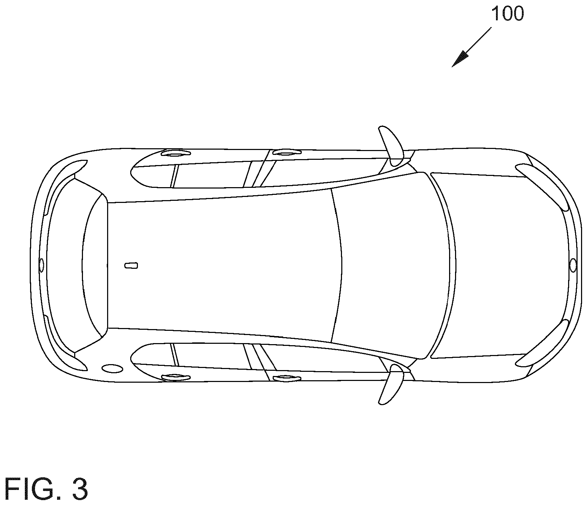

In der Fig. 1 ist ein Teil eines Innenraums eines Kraftfahrzeugs 100 (siehe Fig. 3) dargestellt, wobei das Kraftfahrzeug 100 in mindestens einem automatisierten Fahrmodus betrieben werden kann. Dabei weist das Kraftfahrzeug 100 einen Sitz 1 auf, der in einer Ruheposition dargestellt ist, wozu dieser um 180° zur normalen Position gedreht ist. Weiter weist das Kraftfahrzeug 100 ein freiprogrammierbares Kombiinstrument 2, ein Head-up-Display 3 und eine zentrale Anzeigeeinheit 4 auf. Vor dem freiprogrammierbaren Kombiinstrument 2 ist ein verfahrbares Lenkrad 5 angeordnet, das vorzugsweise mit nicht dargestellten Eingabeelementen ausgebildet ist. Weiter weist das Kraftfahrzeug 100 eine verstellbare Mittelkonsole 6 und einen Rückspiegel 7 auf, der vorzugsweise zwei voneinander getrennt ansteuerbare Anzeigeeinheiten aufweist.

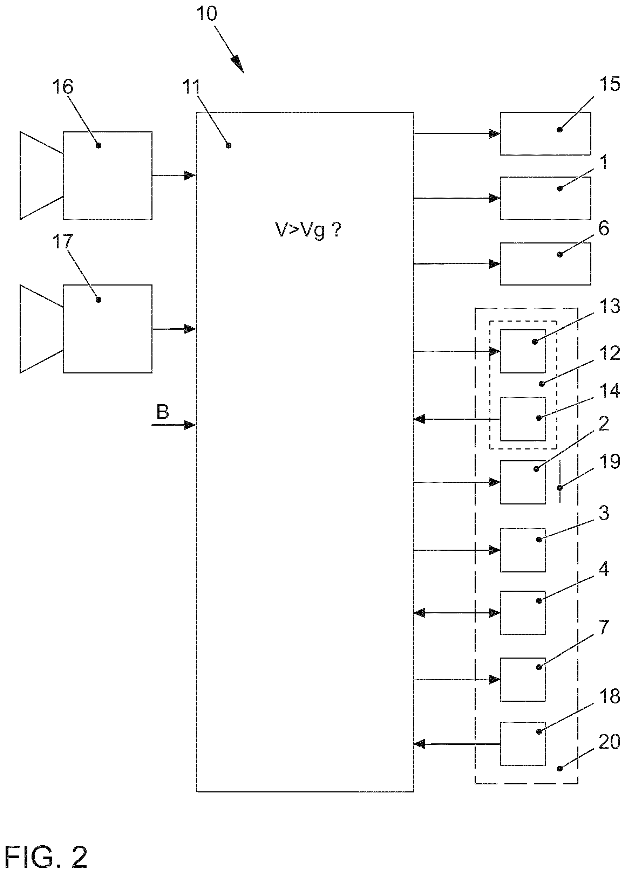

Die Wirkungsweise soll nun anhand des Blockschaltbildes gemäß Fig. 2 näher erläutert werden, die eine Vorrichtung 10 zur Anpassung einer Mensch-Maschine-Schnittstelle zeigt. Die Vorrichtung 10 weist eine Auswerte- und Steuereinheit 11 auf. Neben den bereits zu Fig. 1 erläuterten Elementen weist die Vorrichtung 10 eine Spracheingabe- und -ausgabeeinheit 12 mit mindestens einem Lautsprecher 13 und mindestens einem Mikrofon 14 auf. Weiter weist die Vorrichtung 10 eine Aktorik 15 zur Durchführung mindestens eines automatisierten Fahrmodus auf. Die Vorrichtung 10 umfasst ferner eine Kamera 16 zur Erfassung eines rückwärtigen Verkehrs und eine Kamera 17 zur Fahrerbeobachtung. Schließlich weist die Vorrichtung noch Eingabeelemente 18, die beispielsweise auf dem Lenkrad 5 (siehe Fig. 1) angeordnet sind, und eine verstellbare Abdeckung 19 im Bereich des freiprogrammierbaren Kombiinstrumentes 2 auf. Das freiprogrammierbare Kombiinstrument 2, das Head-up-Display 3, die zentrale Anzeigeeinheit 4, der Rückspiegel 7, die Spracheingabe- und -ausgabeeinheit 12 und die Eingabeelemente 18 bilden dabei zusammen die Mensch-Maschine-Schnittstelle 20.

Schaltet nun ein Fahrer über die Eingabeelemente 18 einen automatisierten Fahrmodus ein oder wird dieser durch das Kraftfahrzeug automatisch ausgewählt, so überprüft die Auswerte- und Steuereinheit 11 ein Vertrauensmaß V des Fahrers in den automatisierten Fahrmodus. Dabei sei der Einfachheit halber angenommen, dass das Vertrauensmaß V binär ist, d.h. entweder groß ist V>Vg oder gering ist V<Vg. Das Vertrauensmaß V kann dabei durch den Fahrer selbst eingegeben werden (z.B. über die Eingabeelemente 18, das Mikrofon 14 oder die zentrale Anzeigeeinheit 4, die beispielsweise als Touch-Screen ausgebildet ist). Gibt der Fahrer ein, dass dieser nur ein geringes Vertrauensmaß V hat, so erhält dieser umfassende Informationen, um das Vertrauen herzustellen. Beispielsweise kann vorgesehen sein, dass der Rückspiegel 7 auf einer seiner beiden Anzeigeeinheiten noch Bilder der Kamera 16 darstellt. In dem freiprogrammierbaren Kombiinstrument 2 werden Stationsinformationen und Erläuterungen für Fahrmanöver angeboten.

Ist hingegen das Vertrauensmaß V>Vg, erhält der Fahrer im automatisierten Fahrmodus nur wenige Informationen. Beispielsweise ist die Sprachausgabe auf das notwendigste beschränkt (z.B. eine Übernahmeaufforderung). Die Abdeckung 19 wird über das Kombiinstrument 2 verfahren und der komplette Rückspiegel 7 wird zur Darstellung von Informationen genutzt. Der Sitz 1 kann automatisch oder nach einer Eingabe in die Ruheposition verfahren werden. Auch die Mittelkonsole 6 kann automatisch oder auf Wunsch verfahren werden.

Alternativ kann das Vertrauensmaß V ermittelt werden, beispielsweise durch Auswertungen der Blickrichtung des Fahrers, die mittels der Kamera 17 erfasst wird. Ergänzend oder alternativ können auch Benutzerhandlungen B ausgewertet werden. Weitere Möglichkeiten sind beispielsweise Gesichtsauswertung oder Auswertung von Körperfunktionen (Puls, Herzschlag, Hautwiderstand).

Das Grundprinzip ist dabei, bei einem geringen Vertrauensmaß V die Mensch-Maschine-Schnittstelle derart anzupassen, dass das Vertrauen des Fahrers gewonnen wird, wohingegen bei einem hohen Vertrauensmaß der Fahrer weitgehend ungestört bleiben soll, um die Vorteile einer automatisierten Fahrt zu genießen.

## Patentansprüche

1. Verfahren zur Anpassung einer Mensch-Maschine-Schnittstelle (20) in einem Kraftfahrzeug (100), wobei das Kraftfahrzeug (100) in mindestens einem automatisierten Fahrmodus betrieben werden kann, wobei
ein Vertrauensmaß (V) des Fahrers erfasst oder ermittelt wird, wobei in Abhängigkeit des erfassten oder ermittelten Vertrauensmaßes (V) die Mensch-Maschine-Schnittstelle (20) angepasst wird,
**dadurch gekennzeichnet, dass**
in Abhängigkeit des Vertrauensmaßes (V) ein Sitz (1) und/oder eine Mittelkonsole (6) verfahren wird oder verfahrbar ist.

2. Verfahren nach Anspruch 1, **dadurch gekennzeichnet, dass** bei einem höheren Vertrauensmaß (V) weniger Informationen und/oder Interaktionsaufforderungen ausgegeben werden.

3. Verfahren nach Anspruch 1 oder 2, **dadurch gekennzeichnet, dass** das Vertrauensmaß (V) aus Betätigungshandlungen (B) und/oder einer Auswertung der Blickrichtung eines Fahrers ermittelt wird.

4. Verfahren nach einem der vorangegangenen Ansprüche, **dadurch gekennzeichnet, dass** mindestens eine graphische Oberfläche mindestens einer Anzeigeeinheit (2-4) in Abhängigkeit des Vertrauensmaßes (V) angepasst wird.

5. Kraftfahrzeug (100) mit einer Mensch-Maschine-Schnittstelle (20), wobei das Kraftfahrzeug (100) derart ausgebildet ist, dass das Kraftfahrzeug (100) in mindestens einem automatisierten Fahrmodus betrieben werden kann, wobei
das Kraftfahrzeug (100) eine Auswerte- und Steuereinheit (11) aufweist, die derart ausgebildet ist, dass ein Vertrauensmaß (V) des Fahrers erfasst oder ermittelt wird, wobei in Abhängigkeit des erfassten oder ermittelten Vertrauensmaßes (V) die Mensch-Maschine-Schnittstelle (20) angepasst wird,
**dadurch gekennzeichnet, dass**
das Kraftfahrzeug (100) mit einem in eine Ruhestellung verfahrbaren Sitz (1) und/oder einer verfahrbaren Mittelkonsole (6) ausgebildet ist, wobei die Auswerte- und Steuereinheit (11) derart ausgebildet ist, dass in Abhängigkeit eines Vertrauensmaßes (V) der Sitz (1) und/oder die Mittelkonsole (6) verfahren wird oder die Verfahrbarkeit freigegeben wird.

6. Kraftfahrzeug nach Anspruch 5, **dadurch gekennzeichnet, dass** die Auswerte- und Steuereinheit (11) derart ausgebildet ist, dass bei einem höheren Vertrauensmaß (V) weniger Informationen und/oder Interaktionsaufforderungen ausgegeben werden.

7. Kraftfahrzeug nach Anspruch 5 oder 6, **dadurch gekennzeichnet, dass** die Auswerte- und Steuereinheit (11) derart ausgebildet ist, dass das Vertrauensmaß (V) aus Betätigungshandlungen (B) und/oder einer Auswertung der Blickrichtung eines Fahrers ermittelt wird.

8. Kraftfahrzeug nach einem der Ansprüche 5 bis 7, **dadurch gekennzeichnet, dass** die Auswerte- und Steuereinheit 811) derart ausgebildet ist, dass mindestens eine graphische Oberfläche mindestens einer Anzeigeeinheit (2-4) in Abhängigkeit des Vertrauensmaßes (V) angepasst wird.

## Claims

1. Method for adapting a human-machine interface (20) in a motor vehicle (100), wherein the motor vehicle (100) can be operated in at least one automated driving mode, wherein
a degree of confidence (V) of the driver is detected or determined, wherein the human-machine interface (20) is adapted as a function of the detected or determined degree of confidence (V),
**characterized in that**
a seat (1) and/or a central console (6) is or can be moved as a function of the degree of confidence (V).

2. Method according to Claim 1, **characterized in that**, in the case of a higher degree of confidence (V), less information and/or fewer interaction prompts are output.

3. Method according to Claim 1 or 2, **characterized in that** the degree of confidence (V) is determined from control actions (B) and/or an evaluation of the viewing direction of a driver.

4. Method according to any one of the preceding claims, **characterized in that** at least one graphical interface of at least one display unit (2-4) is adapted as a function of the degree of confidence (V).

5. Motor vehicle (100) with a human-machine interface (20), wherein the motor vehicle (100) is designed in such a way that the motor vehicle (100) can be operated in at least one automated driving mode, wherein
the motor vehicle (100) has an evaluation and control unit (11), which is designed in such a way that a degree of confidence (V) of the driver is detected or determined, wherein the human-machine interface (20) is adapted as a function of the detected or determined degree of confidence (V),
**characterized in that**
the motor vehicle (100) is designed with a seat (1) that can be moved into a rest position and/or with a moveable central console (6), wherein the evaluation and control unit (11) is designed in such a way that the seat (1) and/or the central console (6) is moved, or the ability to move is enabled as a function of a degree of confidence (V) .

6. Motor vehicle according to Claim 5, **characterized in that** the evaluation and control unit (11) is designed in such a way that, in the case of a higher degree of confidence (V), less information and/or fewer interaction prompts are output.

7. Motor vehicle according to Claim 5 or 6, **characterized in that** the evaluation and control unit (11) is designed in such a way that the degree of confidence (V) is determined from control actions (B) and/or an evaluation of the viewing direction of a driver.

8. Motor vehicle according to any one of Claims 5 to 7, **characterized in that** the evaluation and control unit (11) is designed in such a way that at least one graphical interface of at least one display unit (2-4) is adapted as a function of the degree of confidence (V).

## Revendications

1. Procédé d'adaptation d'une interface homme-machine (20) dans un véhicule automobile (100), le véhicule automobile (100) pouvant fonctionner dans au moins un mode de conduite automatisé, dans lequel
un degré de confiance (V) du conducteur est détecté ou déterminé, l'interface homme-machine (20) étant adaptée en fonction du degré de confiance (V) détecté ou déterminé,
**caractérisé en ce qu'**un siège (1) et/ou une console centrale (6) sont déplacés ou peuvent être déplacés en fonction du degré de confiance (V).

2. Procédé selon la revendication 1, **caractérisé en ce que** pour un degré de confiance (V) plus élevé, moins d'informations et/ou de demandes d'interaction sont sorties.

3. Procédé selon la revendication 1 ou 2, **caractérisé en ce que** le degré de confiance (V) est déterminé selon des actions d'actionnement (B) et/ou une évaluation de la direction du regard d'un conducteur.

4. Procédé selon l'une quelconque des revendications précédentes, **caractérisé en ce qu'**au moins une interface graphique d'au moins une unité d'affichage (2-4) est adaptée en fonction du degré de confiance (V) .

5. Véhicule automobile (100) comprenant une interface homme-machine (20), le véhicule automobile (100) étant réalisé de telle sorte que le véhicule automobile (100) peut fonctionner dans au moins un mode de conduite automatisé, le véhicule automobile (100) présentant une unité d'évaluation et de commande (11) qui est réalisée de telle sorte qu'un degré de confiance (V) du conducteur est détecté ou déterminé, l'interface homme-machine (20) étant adaptée en fonction du degré de confiance (V) détecté ou déterminé,
**caractérisé en ce que** le véhicule automobile (100) est réalisé avec un siège (1) pouvant être déplacé dans une position de repos et/ou avec une console centrale (6) pouvant être déplacée, l'unité d'évaluation et de commande (11) étant réalisée de telle sorte que le siège (1) et/ou la console centrale (6) sont déplacés ou la possibilité de déplacement est validée en fonction d'un degré de confiance (V).

6. Véhicule automobile selon la revendication 5, **caractérisé en ce que** l'unité d'évaluation et de commande (11) est réalisée de telle sorte que pour un degré de confiance (V) plus élevé, moins d'informations et/ou de demandes d'interaction sont sorties.

7. Véhicule automobile selon la revendication 5 ou 6, **caractérisé en ce que** l'unité d'évaluation et de commande (11) est réalisée de telle sorte que le degré de confiance (V) est déterminé selon des actions d'actionnement (B) et/ou une évaluation de la direction du regard d'un conducteur.

8. Véhicule automobile selon l'une quelconque des revendications 5 à 7, **caractérisé en ce que** l'unité d'évaluation et de commande (11) est réalisée de telle sorte qu'au moins une interface graphique d'au moins une unité d'affichage (2-4) est adaptée en fonction du degré de confiance (V).
